## Europäisches Patentamt

## European Patent Office

## Office européen des brevets

(19)

(11) Veröffentlichungsnummer: **0 068 103**
**B1**

(12)

# EUROPÄISCHE PATENTSCHRIFT

(45) Veröffentlichungstag der Patentschrift:
27.02.85

(51) Int. Cl.⁴: **F 16 C  33/10,** F 16 N  7/38

(21) Anmeldenummer: 82103728.0

(22) Anmeldetag: 30.04.82

(54) **Hydrodynamisches Lager.**

(30) Priorität: 30.06.81  DE 3125740

(43) Veröffentlichungstag der Anmeldung:
05.01.83 Patentblatt 83/1

(45) Bekanntmachung des Hinweises auf die Patenterteilung:
27.02.85 Patentblatt 85/9

(84) Benannte Vertragsstaaten:
AT BE DE FR GB IT SE

(56) Entgegenhaltungen:
DE - B - 1 303 753
GB - A - 1 314 067
US - A - 3 887 245
US - A - 4 152 032

(73) Patentinhaber: Krupp Polysius AG,
Graf-Galen-Strasse 17, D-4720 Beckum (DE)

(72) Erfinder: Heinemann, Otto, Ing. grad., Galileistrasse 8,
D-4722 Ennigerloh (DE)
Erfinder: Heiringhoff, Burkhard, Ing. grad.,
Theodor-Heuss-Strasse 19, D-4740 Oelde (DE)
Erfinder: Linzel, Leonhard, Ing. grad., Linzel 35,
D-4740 Oelde (DE)
Erfinder: Schössler, Werner, Ing. grad.,
Zeppelinstrasse 22, D-4730 Ahlen (DE)
Erfinder: Grothaus, Hubert, Ing. grad., Schulstrasse 9,
D-4505 Iburg-Glaue (DE)
Erfinder: Krumme, Helmut, Königstrasse 29,
D-4724 Wadersloh (DE)
Erfinder: Lücke, Helmut, Ing. grad., Zum Igelsbusch 2,
D-4720 Beckum (DE)

(74) Vertreter: Tetzner, Volkmar, Dr.-Ing. Dr. Jur.,
Van-Gogh-Strasse 3, D-8000 München 71 (DE)

## Beschreibung

Die Erfindung betrifft ein hydrodynamisches Lager entsprechend dem Oberbegriff des Anspruches 1.

Ein hydrodynamisches Lager der im Oberbegriff des Anspruches 1 vorausgesetzten Art ist beispielsweise durch die US-A Nr. 3887245 bekannt.

Die einem solchen Lager zugeführte Ölmenge wird nach der im Lager erzeugten, vom Öl abzuführenden Wärmemenge ausgelegt. Die zu Kühlzwecken benötigte Ölmenge ist dabei stets um ein Vielfaches grösser als die Ölmenge, die vom Lager zum Aufbau des hydrodynamischen Schmierfilmes benötigt wird. Letztere wird somit aus einem Überangebot von Öl automatisch vom Lager eingezogen, während der übrigen, weitaus grössere Teil der Ölmenge in der Nähe der Nut abgespritzt wird.

Dabei baut sich in dieser Nut im Betrieb ein hydrostatischer Öldruck (von 0,5 bis 2,5 MPa) auf, dessen Höhe zum einen von der Grösse des Ölstromes und zum andern von der momentanen Grösse des Spaltes zwischen Lauffläche und gelagertem Element abhängt. Ist der Spalt gross, so entwickelt sich nur ein kleiner Öldruck; passen Lauffläche und gelagertes Element dagegen sehr gut aufeinander, so stellt sich in der Nut ein hoher Öldruck ein.

Ein hoher Öldruck in der Nut ist wünschenswert, da er den Einzug des Schmieröles in das Lager verbessert und damit die Sicherheit der Hydrodynamischen Schmierung vergrössert. Das Lager kann bei vergrösserter Betriebssicherheit höher belastet werden.

Nachteilig ist jedoch, dass die Höhe des in der Nut herrschenden Öldruckes in Abhängigkeit von den jeweiligen Spaltverhältnissen schwankt und sich nicht genau vorherbestimmen lässt. Die Antriebsleistung der Ölpumpe muss daher für den maximal auftretenden Druck ausgelegt werden.

Die bekannten hydrodynamischen Lager sind daher mit dem Nachteil behaftet, dass die Ölpumpe für eine sehr hohe Antriebsleistung ausgelegt werden muss und sich im Betrieb ein hoher Energieverbrauch durch die unter hohem Druck abgespritzte, nicht als Schmierfilm in das Lager eingezogene Ölmenge ergibt. Ungünstig ist auch, dass diese aus der Nut abgespritzte Ölmenge keine optimale Wärmeabführung gewährleistet.

Zum Stand der Technik gehört weiterhin ein hydrodynamisches Gleitlager (GB-A Nr. 1314067), bei dem eine Ölpumpe über je eine Drosselstelle und ein Rückschlagventil mit einer Anzahl von Lagertaschen verbunden ist, wobei sich in wenigstens einer dieser Lagertaschen im Betrieb ein hydrodynamischer Druck aufbaut, der höher als der Zuführdruck des Öles ist, so dass das erwähnte Rückschlagventil schliesst. An die Ölleitung zwischen der Pumpe und den einzelnen Drosselstellen ist hierbei ein Druckentlastungsventil angeschlossen, das das überschüssige Öl in einen Vorratsbehälter zurückführt.

Der Erfindung liegt die Aufgabe zugrunde, ein hydrodynamisches Lager der im Oberbegriff des Anspruches 1 vorausgesetzten Art so auszubilden, dass die Ölpumpe wesentlich kleiner dimensioniert werden kann, der Energieverbrauch im Betrieb gesenkt wird und eine bessere Wärmeanführung durch den nicht zur Schmierung verwendeten Teil des Öles erreicht wird.

Diese Aufgabe wird erfindungsgemäss durch die kennzeichnenden Merkmale des Anspruches 1 gelöst.

Durch das Druckbegrenzungsventil wird in der Nut ein konstanter, verhältnismässig niedriger Öldruck (zweckmässig von 0,2 bis 0,5 MPa) gehalten. Das nicht vom Lager hydrodynamisch eingezogene überschüssige Öl strömt bei diesem mässigen Druck über das Druckbegrenzungsventil ab. Durch die wesentliche Verringerung des Öldrukkes in der Nut kann die Ölpumpe erheblich kleiner dimensioniert werden; dadurch verkleinert sich zugleich der Energieverbrauch im Betrieb.

Indem die Abströmseite des Druckbegrenzungsventiles mit einer zur Kühlung des gelagerten Elementes geeigneten Stelle, vorzugsweise mit der Ablaufseite des Lagerelementes, in Verbindung steht, wird mit der überschüssigen Ölmenge eine besonders wirkame Kühlung erreicht.

Zwei Ausführungsbeispiele der Erfindung sind in der Zeichnung schematisch veranschaulicht. Dabei zeigen:

Fig. 1 ein Lager mit einem einzigen Lagerelement, und

Fig. 2 ein Lager mit mehreren Lagerelementen.

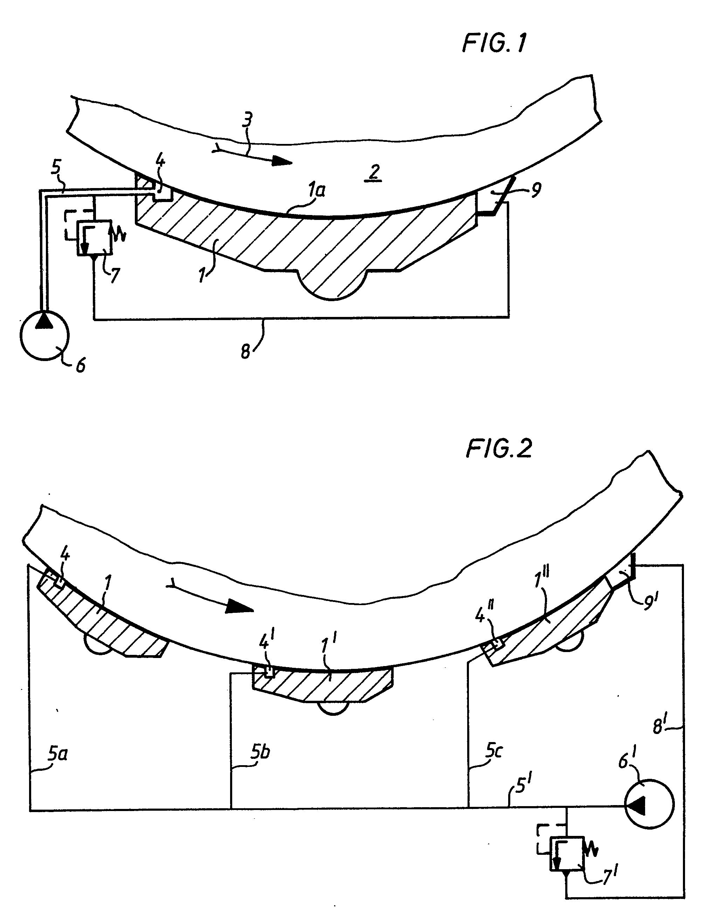

Gemäss Fig. 1 enthält das hydrodynamische Lager ein drehfest angeordnetes Lagerelement 1, auf dem das drehbar gelagerte Element 2 in Drehrichtng des Pfeiles 3 gleitet.

Auf der Zulaufseite der Lauffläche 1a des Lagerelementes 1 ist eine Nut 4 vorgesehen, die über eine Ölzuführleitung 5 mit einer Ölpumpe 6 verbunden ist.

An die Ölzuführleitung 5 ist ein Druckbegrenzungsventil 7 angeschlossen, dessen Abströmseite über eine Leitung 8 mit einer Tasche 9 in Verbindung steht, die sich auf der Ablaufseite des Lagerelementes 1 befindet.

Das Druckbegrenzungsventil 7 hält in der Nut 4 einen bestimmten Vordruck (beispielsweise 0,2 MPa) aufrecht. Das Schmieröl wird durch das drehbar gelagerte Element 2 in den Spalt eingezogen und baut darin den hydrodynamischen Schmierfilm auf. Das überschüssige Öl gelangt über das Druckbegrenzungsventil 7 und die Leitung 8 in die Tasche 9, aus der es vom Umfang des drehbar gelagerten Elementes 1 mitgenommen wird. Statt dessen oder zusätzlich kann dieses über das Druckbegrenzungsventil 7 abgeführte Öl auch an anderer Stelle dem drehbar gelagerten Element 2 zugeführt werden und hierbei Lagerreibungswärme abführen.

Bei dem in Fig. 2 dargestellten Ausführungsbeispiel enthält das Lager mehrere als Segmente ausgeführte, drehfest angeordnete Lagerelemente 1, 1', 1'', die auf der Zulaufseite ihrer Lagerfläche je eine Nut 4, 4' bzw. 4'' aufweisen.

Diese Nuten 4, 4', 4'' sind über eine Hauptleitung 5' und Abzweigleitungen 5a, 5b und 5c an eine gemeinsame Ölpumpe 6' angeschlossen. Mit der Hauptleitung 5' ist ein Druckbegrenzungsventil 7' verbunden, dessen Abströmseite über eine Leitung 8' mit einer Tasche 9' auf der Ablaufseite des ablaufseitig letzten Lagerelementes 1" in Verbindung steht.

In allen Nuten 4, 4', 4" stellt sich etwa der gleiche, verhältnismässig niedrige Vordruck ein. Die überschüssige Ölmenge wird über das Druckbegrenzungsventil 7' abgeführt und ermöglicht im Bereich der Tasche 9 (d.h. an der heissesten Stelle des Lagers) eine optimale Wärmeabfuhr.

Der durch die Erfindung erzielte technische Fortschritt ergibt sich besonders deutlich aus folgender Gegenüberstellung der Dimensionierung der Ölpumpe bei herkömmlicher und erfindungsgemässer Anordnung:

Erwartet man bei der herkömmlichen Anordnung in der Nut eine Druckerhöhung von 2 MPa, so wird man zur Berücksichtigung gewisser Unsicherheiten (Spaltverhältnisse) die Pumpe für wenigstens 2,5 MPa dimensionieren. Die Ölmenge sei mit 28 l/min angenommen (hiervon beträgt die Schmierölmenge 4,5 l/min, während 23,5 l/min abgespritzt werden bzw. zur Wärmeabfuhr dienen).

Die Pumpenleistung (proportional Druck und Ölmenge) errechnet sich damit für die herkömmliche Anordnung mit 1,64 kW.

Wird dagegen ein erfindungsgemässes Druckbegrenzungsventil angeordnet und der in der Nut auftretende Druck auf 0,2 MPa eingestellt, so errechnet sich die hierfür notwendig Pumpenleistung mit 0,13 kW.

Entsprechend dieser Verringerung der zu installierenden Leistung ergibt sich im Betrieb eine laufende Energieersparnis. Sie erklärt sich daraus, dass bei der erfindungsgemässen Lösung die verhältnismässig grosse Ölmenge, die nicht zur Schmierfilmbildung dient, sondern zur Wärmeabfuhr verwendet wird, nicht unnötigerweise auf einen hohen hydrostatischen Vordruck gebracht wird.

Die Verwendung eines einzigen Druckbegrenzungsventiles für mehrere Lagerelemente bringt im übrigen auch den weiteren Vorteil mit sich, dass dadurch auch das Problem der Ölverteilung auf die einzelnen Lagerelemente ohne Energieverluste gelöst ist. Dadurch erübrigen sich ausserdem zusätzliche Bauelemente zur Ölverteilung, wie Ölstromteiler, Drosseln und dergleichen.

## Patentansprüche

1. Hydrodynamisches Lager, dessen drehfest angeordnetes Lagerelement (1) auf der Zulaufseite seiner Lauffläche (1a) eine mit Öl gespeiste Nut (4) aufweist, die über eine Ölzuführleitung (5) mit einer Ölpumpe (6) verbunden ist, dadurch gekennzeichnet, dass an die Ölzuführleitung (5) oder an die Nut (4) ein Druckbegrenzungsventil (7) angeschlossen ist, dessen Abströmseite mit einer zur Kühlung des gelagerten Elementes (2) geeigneten Stelle, vorzugsweise mit der Ablaufseite des Lagerelements (1), in Verbindung steht.

2. Lager nach Anspruch 1, mit mehreren als Segmente ausgeführten, drehfest angeordneten Lagerelementen (1, 1', 1"), die auf der Zulaufseite ihrer Lauffläche je eine Nut (4, 4', 4") aufweisen, wobei diese Nuten über Abzweigleitungen (5a, 5b, 5c) und eine Hauptleitung (5') mit einer gemeinsamen Ölpumpe (6') verbunden sind, dadurch gekennzeichnet, dass an diese Leitungen oder Nuten ein einziges, für alle Lagerelemente gemeinsames Druckbegrenzungsventil (7') angeschlossen ist.

3. Lager nach den Ansprüchen 1 und 2, dadurch gekennzeichnet, dass die Abströmseite des Druckbegrenzungsventiles (7') mit der Ablaufseite des ablaufseitig letzten Lagerelementes (1") in Verbindung steht.

## Claims

1. Hydrodynamic bearing, the bearing element (1) of which is arranged so as to be fixed against rotation and has on the inlet side of its bearing surface (1a) a groove (4) which is supplied with oil and is connected *via* an oil supply line (5) to an oil pump (6), characterised in that a pressure limiting valve (7) is connected to the oil supply line (5) or to the groove (4), the outlet side of the pressure limiting valve (7) being connected to a point suitable for cooling the mounted element (2), preferably to the outlet side of the bearing element (1).

2. Bearing according to Claim 1, with several bearing elements (1, 1', 1") which are constructed as segments arranged fixed against rotation and each have a groove (4, 4', 4"), these grooves being connected *via* branch lines (5a, 5b, 5c) and a main line (5') to a common oil pump (6'), characterised in that one single pressure limiting valve (7') which is common to all the bearing elements is connected to these lines or grooves.

3. Bearing according to Claims 1 and 2, characterised in that the outlet side of the pressure limiting valve (7') is connected to the outlet side of the last bearing element (1") on the outlet side.

## Revendications

1. Palier hydrodynamique, dont le coussinet (1) immobile en rotation comporte sur le côté d'entrée de sa surface de glissement (1a) une gorge (4) alimentée en huile et communiquant par une canalisation d'arrivée (5) avec une pompe à huile (6), caractérisé en ce qu'un limiteur de pression (7), dont l'évacuation communique avec un emplacement convenant au refroidissement de l'élément supporté (2), de préférence avec le côté de la sortie du coussinet (1), est raccordé à la canalisation d'arrivée d'huile (5) ou à la gorge (4).

2. Palier selon la revendication 1, comprenant plusieurs coussinets (1, 1', 1") immobiles en rotation, en forme de segments, dont chacun comporte une gorge (4, 4', 4") du côté de l'entrée de sa surface de glissement, ces gorges communiquant par des embranchements (5a, 5b, 5c) et une canalisation principale (5') avec une pompe à huile commune (6'), caractérisé en ce qu'un unique limiteur de pression (7'), qui est commun à tous les coussinets, est raccordé à ces canalisations ou ces gorges.

3. Palier selon les revendications 1 et 2, caractérisé en ce que l'évacuation du limiteur de pression (7') communique avec le côté de la sortie du dernier coussinet (1'') situé lui-même du côté de la sortie.

*FIG.1*

*FIG.2*